# EUROPEAN PATENT SPECIFICATION

(11) **EP 0 904 690 B1**
(45) Date of publication and mention of the grant of the patent: **20.11.2002**
(21) Application number: 98203243.5
(22) Date of filing: 28.09.1998
(51) Int. Cl.: A01K 31/22

(54) **Poultry house furnishing and method for holding poultry**
Hühnerstallausstattung und Methode der Hühnerhaltung
Equipement de poulailler et méthode d'élevage de volaille

(30) Priority: 26.09.1997 NL 1007134; 26.03.1998 NL 1008719
(43) Date of publication of application: 31.03.1999
(73) Proprietor: Pol, Roelof, 7926 TP Kerkenveld (NL); Bruins, Eduard Herman, 7771 CA Hardenberg (NL)
(72) Inventor: Pol Roelof, 7926 TP Kerkenveld (NL)
(74) Representative: Smulders, Theodorus A.H.J., Ir.

(56) References cited:
- EP-A- 0 064 175
- WO-A-86/04779
- CH-A- 670 032
- DE-A- 1 814 097
- GB-A- 661 258
- GB-A- 886 403
- NL-C- 1 004 441
- BORCHERT: "Ein 2-Etagen-Laufstall für Legehennen" LANDTECHNIK, vol. 40, no. 6, June 1985, pages 267-269, XP002065271 LEHRTE (DE)

## Description

The invention relates to a poultry house furnishing according to the preamble of claim 1 and to a method for holding poultry according to the preamble of claim 14.

Such a furnishing and such a method are known from Swiss patent specification 670 032.

A tier unit for a poultry house is known from the international patent application having publication number WO 85/03198. Compared with a more conventional layout of a poultry house having a manure bin under the resting, eating and drinking space, this enables a space saving in that the animals spend a significant part of their residence time on stacked tiers. Further, due to the lack of a manure bin, which forms a favorable habitat for mice and other undesired guest animals, an improved hygiene is realized - in particular a reduced risk of salmonella infection.

Further, according to this publication, the laying nests are accommodated in a separate tier unit arranged next to the first-mentioned tier unit so close that the animals of the first-mentioned tier unit can hop directly to a laying nest. Provided in front of the laying nests are perches on which the animals can land before entering the laying nests and from where the animals, after leaving the laying nest in question, can move to other portions of the poultry house.

The object of the invention is to provide a tier unit which enables an improved productivity.

According to a first aspect of the present invention, this object is realized by providing a poultry house furnishing according to claim 1.

By providing that the tier which spans the interspace between the tier units further comprises laying nests, the tendency to lay eggs on the bottom of the poultry stable is reduced.

The invention is based on the insight that accessibility of the laying nests is of particular importance for the well-being of the animals and the productivity of the group, because in the full poultry house (also in the case of "free-range egg occupation"), when moving through the house, particularly lower-rank animals are attacked by other animals and are inclined to lay their eggs outside the laying nest if they meet with difficulties in attempting to reach a laying nest. The tier spanning the interspace between the tier units and comprising laying nests and eating and/or drinking systems form an area which is separated from the scratching bottom relatively substantially and which is provided with all facilities necessary for the chickens, so that the chickens that cannot or cannot properly maintain themselves on the scratching bottom and the other tiers need not leave this area for their daily needs.

According to the invention, a furnishing according to claim 1 is preferably used by holding hens in accordance with claim 14. By first holding the hens in the upper area of the house after putting them out, the animals are accustomed to the presence of facilities and residence space in that upper area. A further advantage of holding the animals on a grating first, is that the danger of suffocation - caused when in a new situation in which they are ill at ease, the animals heap up - is smaller on a grating than on a littered scratching floor.

Further particular constructional aspects of the invention are described in the dependent claims and in the following specification. Hereinafter, further objects, embodiments, effects and advantages of the invention will be described and specified on the basis of a presently most preferred exemplary embodiment and some variants, with reference to the accompanying drawings. In these drawings:
Fig. 1 is a frontal view of a tier unit for a furnishing according to a first exemplary embodiment of the invention;
Fig. 2 is a schematic top plan view of a laying nest unit of a tier unit according to the example shown in Fig. 1;
Fig. 3 is a side elevation in section taken on the line III-III in Fig. 2;
Fig. 4 is a side elevation in section taken on the line IV-IV in Fig. 2;
Fig. 5 is a schematic top plan view of the laying nest unit according to Fig. 2;
Fig. 6 is a frontal view in section of a poultry house including tier units according to a variant to the tier unit shown in Fig. 1;
Figs. 7 and 8 are frontal views of alternative examples of tier units for a furnishing according to the invention, and
Figs. 9 and 10 are frontal views of poultry house layouts having tier units connected by a spanning tier.

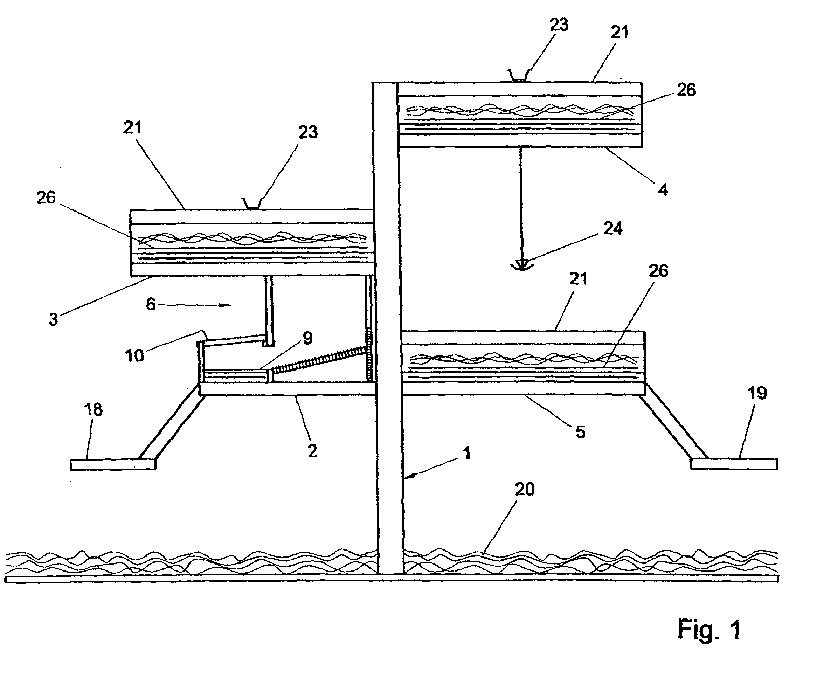

First the exemples of tier units shown in Figs. 1-6 are described. After that, some of the many alternative practical possibilities will be discussed. Hereinbelow, as far as the animals are concerned, chickens will in each case be involved, because by far the most important use falls within the framework of holding laying hens in a living space with free-range facility.

The tier units shown in Figs. 1-5 are composed of a rack work having a frame 1 and tiers 2-5 projecting from the frame 1.

The tiers 2 support laying nest units 6, each consisting of two joint laying nests 7, 8, each having room for a plurality of chickens at the same time. In fact, it is also possible to arrange a plurality of individual or joint laying nests one behind the other, while the number of chickens fitting in a joint laying nest may also be chosen to be different and may be constant or be varied within a tier unit. Along the laying nests, an egg-conveying track 9 extends in a housing 10. The laying nests each have a downwardly inclined bottom 11, causing the eggs to roll towards the egg-conveying track 9 of their own accord. The laying nests 7, 8 further comprise an expelling system having expellers 12, 13 and entrances 14, 15 with screening flaps 16, 17 in front of the outer portions of the entrances 14, 15 which increase the privacy of the laying nests 7, 8 and, accordingly, the attractiveness of the laying nests 7, 8 as a place for laying eggs.

Extending along the front of the joint laying nests 7, 8 is a spring platform 18 on which the chickens can land and from which the chickens can flap or hop away after they have come out of a laying nest again. A similar spring platform 19 also extends along the front of the arms 5. The spring platforms 18, 19 are suspended at a slightly lower position than the arms 2, 5, allowing them to serve as intermediate station for chickens on their way from or to the scratching bottom 20 extending below the tier unit.

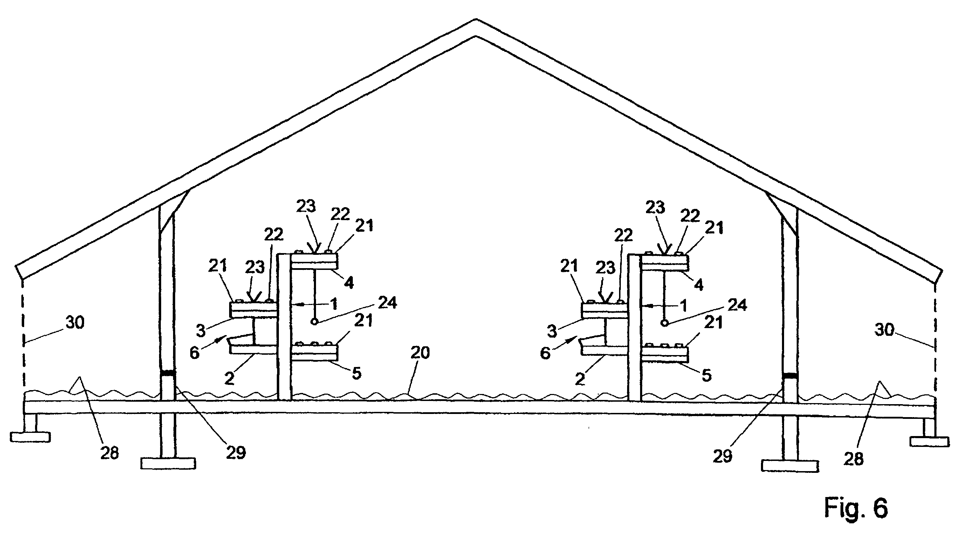

The arms 3, 4, 5 support gratings 21 on which the chickens can rest, eat and drink. According to the variant shown in Fig. 6, roosts 22 are moreover mounted on top of the gratings 21. To each of the examples shown it applies that above the gratings, inter alia depending on the construction of the gratings and the rules in respect of roosts, roosts may or may not be mounted. For offering feed, feed channels 23 are mounted above the arms 3, 4. Other feeding systems, such as feed pans and the like, may of course also be used. Further, according to Fig. 1, a drinking provision 24 is arranged above the grating 21 on the arms 5.

Under the gratings 21, manure conveyors 26 extend in a direction perpendicular to the plane of the drawing. As manure piles up in the highest concentrations under the gratings, a substantial improvement of hygiene is thus achieved and gratings can be located directly next to and even above the laying nests 7, 8 without any particular problem.

The arrangement of at least one tier having sitting facility 21, 22 above the laying nest units 6 enables a further saving of the required floor surface area at a given total living area per chicken.

The arms 3, 4, 5 with gratings 21 of the tier unit shown in Fig. 1 thus constitute three tiers for the distinguishable functions eating (the tiers supported by arms 3 and 4), resting (all tiers except for the laying nests) and drinking (the tiers supported by arms 5). If required, food and drink can also be offered on more tiers and, if required, on all tiers.

As the laying nests with the resting and feeding and/or drinking facilities are integrated into one tier unit, for the layout of poultry houses a type of tier unit which proportionally comprises feeding and/or drinking as well as. resting and laying facilities, in accordance with the installed length, may suffice. Due to the mixed arrangement of these facilities, a better divided positioning of the laying nests can be achieved and, accordingly, a general improvement of the accessibility of the laying nests. Hence, chickens that have to lay an egg generally need to travel a shorter distance along often hostile other chickens for reaching the laying nest. This increases the productivity, in particular because fewer eggs are laid outside the laying nests and because the well-being of the chickens is increased.

One of the joint laying nests 8 in the laying nest unit 6 has its entrance 15 on the side of grating 21 next to the joint laying nest 8, as a result of which that joint laying nest 8 is directly accessible from the grating 21 on that tier.

For the accessibility of the joint laying nest 8 next to the grating 21 supported by the arms 5, it is advantageous that it is not substantially staggered in vertical direction relative to the grating 21 supported by the arms 5. However, also in the case where the laying nests are staggered less than one whole tier relative to adjacent sitting facilities, a proper accessibility of the laying nests from the adjacent tier will generally be achieved.

Further, the laying nest unit 6 shown has a joint laying nest 7 whose entrance 14 faces away from the adjacent tier or the adjacent tier part. Such orientation of the entrance 14 renders that joint laying nest 7 directly accessible from the scratching space 20. Thus, the laying nests 7, 8 are accessible from two sitting facilities 18, 21 which are each staggered in vertical direction over less than one whole tier relative to the relevant entrances 14, 15 of those laying nests 7, 8. This promotes a good accessibility of the nests 7, 8 and, accordingly, contributes to limiting the number of eggs laid outside the laying nests.

Due to the evenly distributed positioning of the laying nests 7, 8, an improved accessibility would already be achieved if the laying nests could exclusively be entered from the bottom or exclusively from a tier of the tier unit. However, a considerably improved accessibility is achieved in that the laying nests 7, 8 are accessible from two opposite sides. In fact, such laying nest units can also be advantageously used in a configuration in which the laying nests are not integrated with the resting and feeding and/or drinking tiers into a tier unit, but are actually readily accessible from a tier unit having resting and feeding facilities, for instance in that the distance between the tier unit and the laying nests can be bridged by the chickens in one jump.

To combine accessibility of laying nests 7, 8 from two sides with offering a high degree of privacy and screening in the joint laying nests 7, 8, the joint laying nests 7, 8 are each separately accessible from one side only, but the entrances of successive laying nests 7, 8 are oriented in opposite directions. Because there are further provided passages 27 between every two successive laying nests 7, 8, accessible from different sides, for allowing chickens to pass directly from one laying nest 7, 8 accessible from one side, to an adjacent laying nest 8, 7 accessible from an opposite side, escape routes in two directions are nevertheless presented to chickens attacked by chickens of higher rank.

Because screening flaps 16, 17 are provided exclusively in the portions of the entrances 14, 15 remote from the passage 27, a view-through and open passage obliquely through the laying nests 7, 8 from one side to the other is obtained, whereby the escape possibilities for attacked chickens is increased in a directly visible manner.

To enable access to the laying nest 7 from the side where the egg-conveying track 9 extends, the entrance 14 of the laying nest 7 can be reached across the top cover 10 of the egg-conveying track 9.

Because in the proposed poultry house, the scratching bottom 20 extends under the tiers with the grating 21 and the laying nests 7, 8, a further saving of the floor surface area is realized and the cleaning of the house is simplified. More in particular, when tier units as proposed are used, virtually the entire floor surface area which is in principle suitable as scratching bottom can actually be utilized as scratching area. These advantages can also be realized, albeit to a lesser degree, if the laying nests are not integrated into the tier unit with facilities for resting, eating and drinking. A tier unit as shown in Fig. 1 can accommodate about 50 chickens per linear meter.

In the house according to Fig. 6, a further, substantial improvement of the well-being of the animals is achieved at limited costs in that the scratching bottom also extends to verandahs 28 communicating with the inner space of the house via passages 29. The verandahs are closed off by wire netting 30 and, if necessary, by wind-breaking screens, so that the chickens can on the one hand come outside, but on the other hand cannot come into contact with animals living in the wild, whereby the chickens could easily become contaminated.

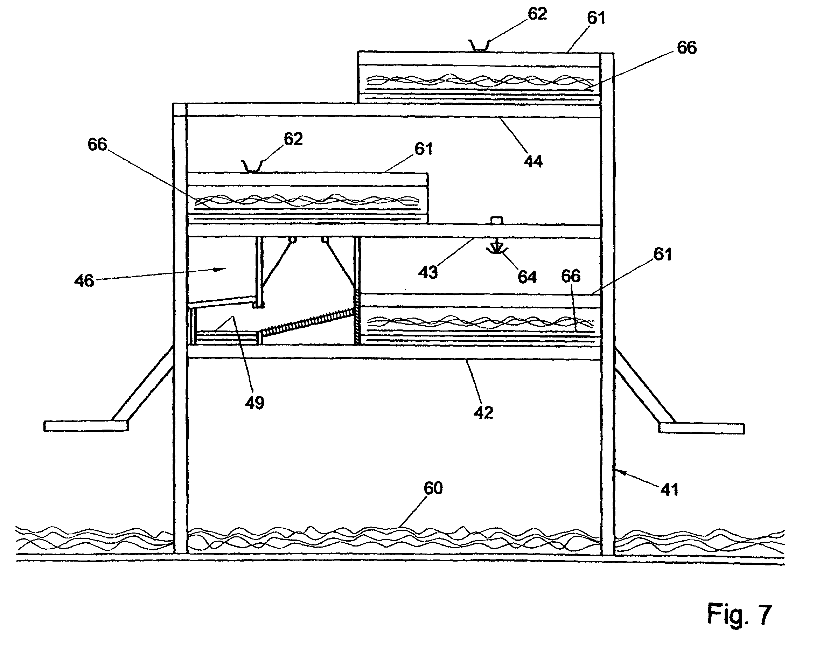

Fig. 7 shows a tier unit with a frame 41 having legs at the ends of the tiers. Provided between the legs are joists 42, 43, 44 supporting gratings 61, manure-discharge belts 66 and laying nest units 46.

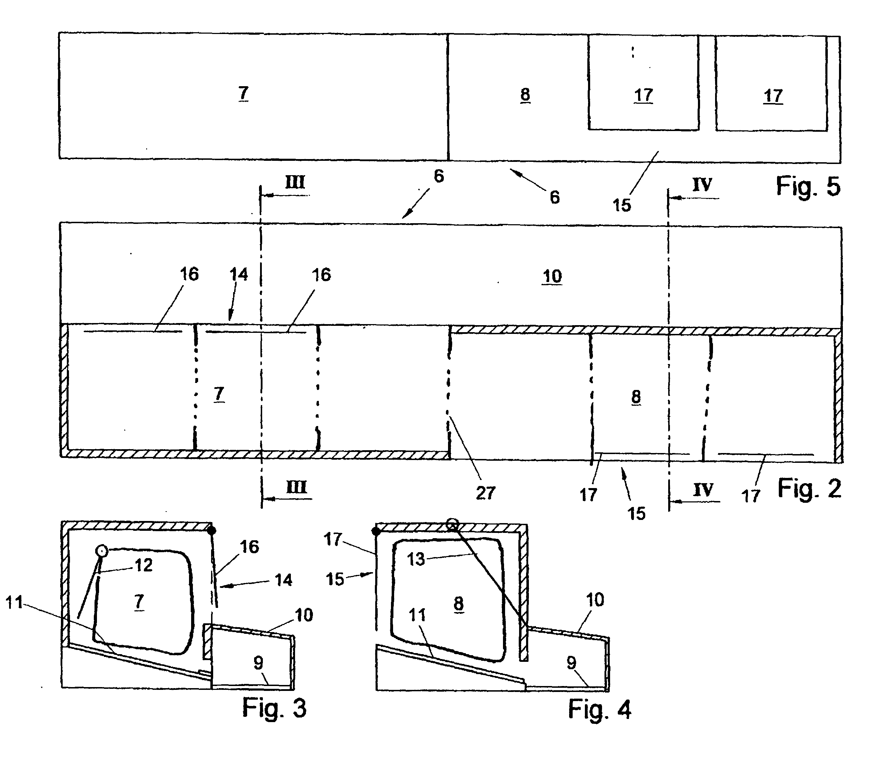

Further, the tier unit is also provided with a feeding system 62 and a drinking system 64. The manure-discharging conveyors 66 extend under the gratings 61. The laying nest units 46 are designed as shown in Figs. 2-5. The scratching bottom 60 extends under the tier 42. It is also possible to apply a ground-floor tier with gratings and laying nests, although the laying nests are preferably provided at a substantial distance above the scratching bottom. This tier should preferably be located slightly above the bottom on which the scratching litter is located, because the thickness of the scratching layer on the bottom increases from the moment when a poultry house is used by a new group of laying hens to the clearing of the house.

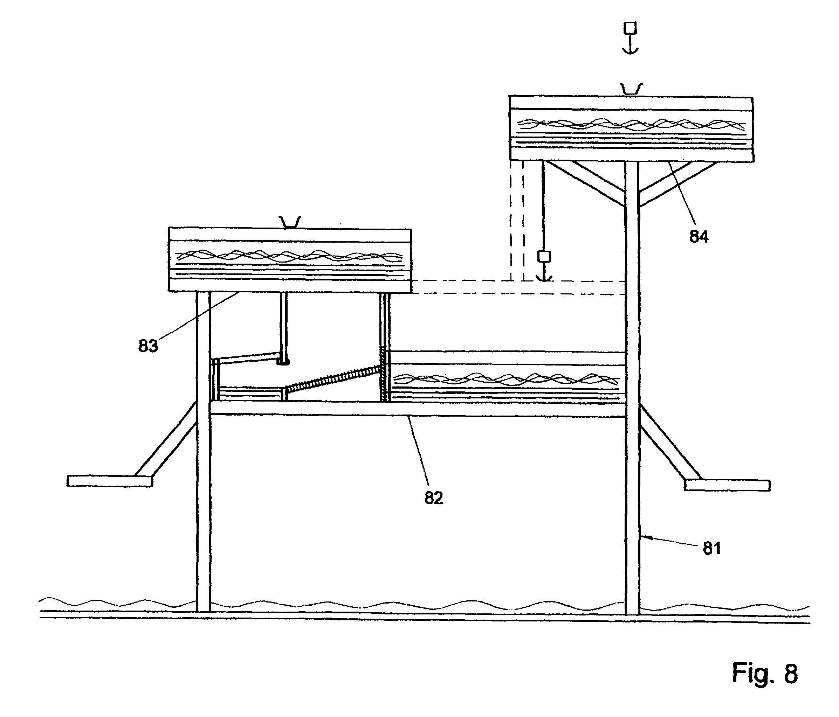

Fig. 8 shows a further variant, improved relative to Fig. 7, of a tier unit for a furnishing according to the invention. This variant differs from the tier unit of Fig. 1 in particular in that the frame 81 of the rack work is of different design and in that joists 82, 83, 84 supporting the tiers are all also staggered in horizontal direction relative to each other. This offers the advantage that the animals can hop and/or flap from one tier to the other more easily.

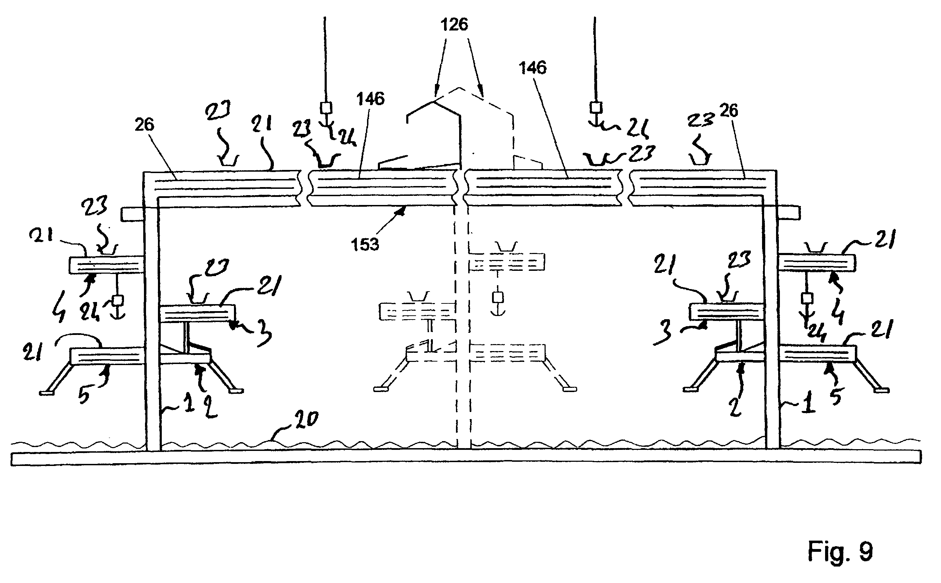

Fig. 9 shows a poultry house layout composed of two tier units, and optionally a third tier unit (shown in dotted lines), according to Fig. 1. The tier units are interconnected by a tier 153 spanning a space between the tier units. According to this example, this spanning tier is designed as a portal 153. The portal 153 supports manure-discharge belts 146 parallel to the manure-discharge belts 26 of the tiers 4, as well as one or two rows of laying nest units 126. Such multiple tier unit is in particular suitable for use in very wide and high poultry houses. It is also possible to interconnect more than three tier units by means of such portal, to form a multiple tier unit.

A construction in which tier units with laying nests and eating and/or drinking systems are connected by portals or at least spanning tiers offers various advantages. The number of supports extending down to the bottom at a given capacity on the roosts or gratings is limited, which facilitates cleaning after clearing of the house and further limits the tendency to lay eggs on the scratching bottom. By means of the portals, the tier units can support one another, so that no bottom anchoring or transversely projecting support for taking up moments against tilting is required.

Portals above the tier units comprising laying nests and eating and/or drinking systems form an area which is separated from the scratching bottom relatively substantially and which is provided with all facilities necessary for the chickens, so that the chickens need not leave this area for their daily needs. The spanning tier in particular forms an attractive, fairly separated residence space for chickens that cannot or cannot properly maintain themselves on the scratching bottom and the other tiers.

The portal is positioned at a height such that persons working in the house can walk upright or almost upright through the gangways present between the tier units. In order to provide sufficient space for persons working in the house to pass underneath the portal 153 on the one hand, and to keep the distance between the portal 153 and the floor reasonably limited on the other, the height of the bottom side of the portal 153 is preferably 1.6-2.5 m, and more in particular preferably 2.0-2.3 m above the litter floor. If little space is available vertically, a height of 1.6-2.2 m, and more in particular 1.8-2.0 m may also suffice.

As the tier units under the portal each comprise a single row of legs 1, the scratching floor can readily be cleaned to under the tiers, for instance by means of a small shovel. Further, if so desired, under the lowermost tiers of the tier units, sitting facilities or step-up platforms may readily be additionally provided at a slight height above the floor, without one having to take into account the mutual distance in longitudinal direction between the legs of the tier units. Viewed from an end face, the legs 1 are preferably centrally arranged in the tier units, so that they impede neither the accessibility of the scratching floor, nor the possibility of additionally providing sitting facilities on the floor from two sides.

In combination with tier units comprising single rows of legs, the use of portals connecting the tier units moreover offers the additional advantage that no floor-supported cross beams or anchorings of the legs in the floor are required for preventing the tier units from falling over. As it is, the tier units are held in a vertical position in that they are fixedly connected to the portal. Tier units having single rows of legs can actually also be advantageously used in rearing houses in which no laying nests are arranged.

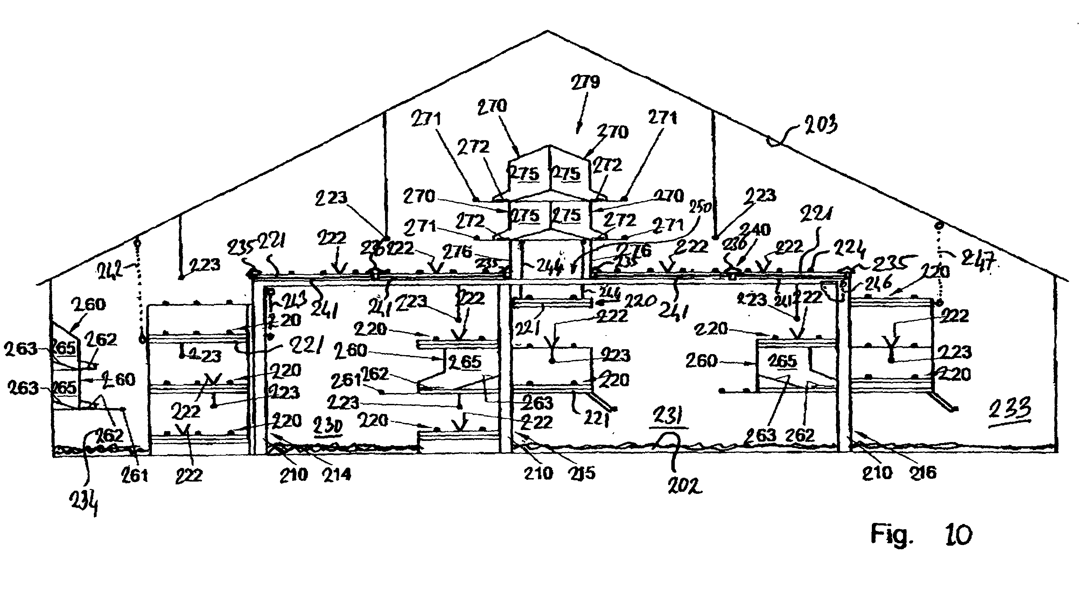

The poultry house shown in Fig. 10 has a house floor 202 and a roof 203. Disposed on the house floor 202, which is designed as scratching bottom, are a number of tier units. In this example, the house layout is composed of three tier units 214, 215, 216. The tier units 214, 215, 216 have uprights 210 supporting tiers 220.

The tiers 220 can be arranged in different manners known per se. According to this example, the tiers 220 are provided with feeding facilities in the form of feeding channels 222, drinking facilities (in this example in the form of nipple drinkers 223) and with roosts 224. As is known per se, sitting gratings may also be used instead of roosts. It is also possible to provide the roosts 224 at a distance above the gratings that screen the manure belts 220, to allow for the natural tendency of chickens to sleep on branches at a distance above the ground. The distance and positioning of the tiers 220 relative to each other and to the floor 202 is such that chickens or chicks can reach all tiers 220. Further, the tiers 220 comprise manure-conveying belts 221 extending in the longitudinal direction of the house, under the roosts 224, for discharging the manure produced by the chickens.

The distance from the lowermost tiers 220 of the tier units 214, 215, 216 down to the litter floor 202 is such that the chickens can hop from the tier units 214, 215, 216 onto the floor 202 and vice versa. The floor 202 is at least partially arranged as litter floor where the chickens can scratch about freely.

Between the tier units 214, 215, 216, gangways 230, 231 are present, whose bottom forms a scratching space for chickens and via which gangways the tier units are accessible to persons for inspection, cleaning, maintenance and, if necessary, the removal of sick and dead animals, and for collecting any eggs that are laid outside laying nests. The width and height of the gangways 230, 231 are such that a grown-up person can walk through them without any problems. In this connection, a width of 1-3 m is in particular effective on the one hand to provide sufficient space for persons working in the house and on the other not to leave too much space for the chickens unused. Also, gangways 233, 234 are present between a wall of the house and the adjacent tier units 214, 216.

Located above the upper tiers 220 of the tier units 214, 215, 216 is a portal-shaped, spanning tier 240 spanning the gangways 230, 231. To provide sufficient space for persons working in the poultry house for passing underneath the spanning tier 240 on the one hand and to keep the distance between the spanning tier 240 and the floor reasonably limited on the other, the height of the bottom side of the spanning tier 240 is preferably 1.6-2.5 m, and more in particular preferably 2.0-2.3 m above the litter floor 202.

The spanning tier 240 is supported by the tier units 214, 215, 216, which offers the advantage that no additional supporting structure is needed, which would moreover form an additional obstacle in the house. However, it is actually possible to support the tier in a different manner, for instance by a portal of its own or utilizing the bearing parts of the house. In that case, virtually any poultry house layout with tier units can readily be extended by a tier spanning the gangways.

The distances of the spanning tier 240 relative to the upper tiers 220 are such that chickens can hop back and forth between the upper tiers 220 of the tier units 214, 215, 216 and the spanning tier 240. In this manner, in conventional poultry house layouts, unused spaces above the gangways are utilized for offering additional living space, integrated into the house, for the animals.

As the spanning tier 240 also extends above the tier units 214, 215, 216, a further contribution to the enlargement of the living space is achieved.

The spanning tier 240 is also provided with roosts 224, drinking and feeding facilities 222, 223 and manure-conveying belts 241 for discharging manure. Provided along the edges of the manure belts 241 are ventilating beams 235, 236 having blow-out openings directed to the top surface of the manure belts 21. This enables manure on the belts to be additionally dried before it is collected. A particular advantage of the ventilating beams 236 located between two manure belts 241 is that they each extend between two manure belts 241, on either side thereof, and can thus treat manure on two belts at the same time. Along the manure belts 221 on the tiers 220, ventilating beams are provided as well, but these are not shown, for the sake of clarity.

The spanning tier 240 is provided with an opening 250. The position and size of the opening 250 relative to the upper tiers 220 is such that chickens can hop from the spanning tier 240 to the tiers 220 and vice versa.

The tiers 220 of the tier units 214, 215 and 216 are provided with laying nests 260. Moreover, laying nests 260 are also provided along a wall of the poultry house. If required, the laying nests can exclusively be provided in laying nest units separately from the tier units 214, 215, 216. Located in front of the entrances of the laying nests 260 facing the outsides of the tier units 214, 215, 216 are spring platforms 261, onto which the chickens can hop to subsequently hop into the laying space 265 of the laying nest 260. The laying spaces 265 have downwardly inclined bottoms 263, so that laid eggs roll down towards egg-conveying belts 262 and are discharged on those belts 262. According to this example, some laying nests are used.

Provided above the spanning tier 240 is a laying nest assembly 279 containing a number of laying nests 270. According to this example, the laying nests 270 are distributed over two laying nest tiers located one above the other. By means of legs 276, the laying nest assembly 279 is supported by the spanning tier 240 and spans the opening 250 present in the spanning tier 240. The height of the legs 276 is such that from the upper tiers 220 of the tier unit 215, chickens can reach the area above the spanning tier 240 via the opening 250 and underneath the laying nest assembly 279. As animals that have arrived on the spanning tier 240 via the opening 250 cannot directly look into the laying nests, the chance that these animals will disturb animals present in the laying nests is smaller. This promotes the attractiveness of the laying nests as a place for laying eggs, which has a favorable (reducing) effect on the percentage of eggs laid outside the laying nests.

The layout of the tier 240 proposed in Fig. 10 is suitable for poultry houses having a width from about 13 m onwards. For wider houses, it may be advantageous to place a plurality of laying nest assemblies, extending in longitudinal direction of the house, at a distance from each other.

Of course, the laying nest assembly may also be provided above the spanning tier 240 in a different manner. The laying nests 270, too, are provided with egg belts 272 and spring platforms 271. The spring platforms of the lowest laying nests are accessible to chickens from the spanning tier 240, and the spring platforms 271 of the upper tiers are accessible via the spring platforms 271 of the tiers located therebelow. From the spring platform 271, a chicken can hop into a laying space 275.

By using the spanning tier 240 with the laying nest assembly 279 present thereabove, the living space available to chickens is further extended. As a result, at a given house floor surface area and a given living surface area per chicken, more chickens can be held in one house.

Further, some chickens prefer laying eggs and sleeping at a relatively great height. Through the use of a spanning tier 240 as proposed and laying nests 270 located thereabove, the need of such chickens is met.

If the house is used for rearing chicks, it is advantageous to hold the chicks, as long as they are small and have a great need of warmth, on the spanning tier and, for that purpose, to shut this tier off from the subjacent spaces in the housing. Also for holding laying hens, it is advantageous to first hold them in the upper area of the house after putting them out, to allow the animals to become accustomed to the presence of facilities and residence space at that location. A further advantage of holding the animals on a grating first, is that the danger of suffocation, caused when in a new situation in which they are ill at ease, the animals heap up, is smaller on a grating than on a scratching floor. This applies in particular when fresh air is supplied via the manure-belt aerators 235, 236.

However, the living area on top of the spanning tier is too small for holding all laying hens to be put out in the house. In the poultry house according to Fig. 10, this problem is overcome in that this house comprises partitions 242, 243, 246, 247 bounding an area within which the upper tiers 220 of the tier units 214, 216 are also included. Apart from the fact that thus, more space is provided for the animals than there is on top of the spanning tier 240 only, this also offers the advantage that the animals learn how, from the spanning tier 240, the area therebelow can be reached and the other way round. By means of cables 244, the upper tier 220 of the central tier unit 215 is suspended from the bottom of the laying nests 275 located at a distance above the spanning tier 240. In this manner, the upper tier 220 of the central tier unit 215 forms a hatch which closes off the passage through the spanning tier 240 when the tier 220 is in a position at the level of the spanning tier 240. In that position, this upper tier 220 also forms a part of the spanning tier 240 provided with manure belts. In the lower position shown, this upper tier 220 of the central tier unit 215 forms a tier which is readily accessible to the animals from the spanning tier 240 as well as from the other tiers of the central tier unit 215. The passage through the spanning tier 240 is important for offering a good accessibility of the area of the house above the spanning tier 240. The partitions 242, 243, 247 are constructed as roll-up screens. The partition 246 between the central uprights of the right tier unit 210 is constructed as a flap valve which in open position is pivoted against the bottom side of the spanning tier.

A further advantage of the possibility of separating an upper area of the house in which all animals fit fairly easily, is that the animals will gather at the top of the house at night. After the return route downwards has been closed off, the animals can easily be collected there if the animals are to be removed from the house. In practice, this last usually takes place in the evening or at night. Hence, it is not necessary to herd the animals together first before the catching can start. This saves time and prevents the animals from getting stressed and injured.

## Claims

1. A poultry house furnishing comprising:
at least two tier units (214, 215, 216), each of said tier units having at least one tier (2-5; 220) which, in condition of use, is located at a distance above a floor (20; 202) and has at least one sitting facility, such as a grating (21) or a roost (224), and administering facilities for at least eating or drinking (22, 23; 222, 223), wherein space for animals is present under said at least one tier (2-5; 220), and at least one of said tiers having laying nests (126; 265, 275), and
a tier (153; 240) which spans an interspace (230, 231) between said tier units (214, 215, 216) and at least comprises sitting facilities (21; 224) and feeding and/or drinking systems (22, 23; 222, 223) accessible to poultry from said sitting facilities (21; 224), wherein the spanning tier (153; 240) is located at such a distance from upper tiers (4; 220) of said tier units (214, 215, 216), that poultry can move from said upper tiers (4; 220) to said spanning tier (153; 240) and vice versa,
**characterized in that** said tier (153; 240) which spans said interspace (230, 231) between said tier units (214, 215, 216) further comprises laying nests (126; 275).

2. A poultry house furnishing according to claim 1, wherein the interspace (230, 231) between said tier units (214, 215, 216) and spanned by said spanning tier (153; 240) forms at least one gangway (230, 231) for persons working in the house.

3. A poultry house furnishing according to any one of the preceding claims, wherein said spanning tier (153; 240) extends from above one of said tier units (214, 215, 216) to above another of said tier units (214, 215, 216).

4. A poultry house furnishing according to any one of the preceding claims, wherein said spanning tier (153; 240) is supported by said tier units (214, 215, 216).

5. A poultry house furnishing according to any one of the preceding claims, wherein said spanning tier (153; 240) is fixedly connected to the tier units (214, 215, 216).

6. A poultry house furnishing according to any one of the preceding claims, wherein said spanning tier (153; 240) is provided with at least one opening (250) through which poultry can move from said spanning tier (153; 240) to said upper tiers (4; 220) of said tier units (214, 215, 216) and vice versa.

7. A poultry house furnishing according to any one of the preceding claims, wherein the laying nests (275) are arranged at a level above the level of the spanning tier (240).

8. A poultry house furnishing according to any one of the preceding claims, wherein the tier units (214, 215, 216) under said spanning tier (153; 240) each comprise a single row of legs (1; 210).

9. A poultry house furnishing according to claim 8, wherein said legs (1; 210), viewed from an end face, are centrally arranged in the tier units (214, 215, 216).

10. A poultry house furnishing according to any one of the preceding claims, further comprising at least one partition (242, 243, 246, 247) for separating under the spanning tier (240) an upper portion of the house from a lower portion of the house.

11. A poultry house furnishing according to any one of the preceding claims, wherein at least two of said sitting facilities (18, 19, 21, 22; 61; 224, 261) are each located next to at least one entrance (14, 15) via which at least one particular one of said laying nests (6; 7, 8; 46; 126; 265) is accessible, and are staggered in vertical direction over less than one whole tier relative to said at least one entrance (14, 15) to said at least one laying nest (6; 7, 8; 46; 126; 265).

12. A poultry house furnishing according to any one of the preceding claims, further comprising passages (27) between every at least two laying nests (7, 8) accessible from different sides, for allowing poultry to pass directly from one of said laying nests (7, 8) which is accessible from one side, to an adjacent one of said laying nests (8, 7) which is accessible from an opposite side.

13. A poultry house furnishing according to any one of the preceding claims, further comprising an egg-conveying track (9; 262) extending along the laying nests (6; 7, 8; 46; 126; 265) and having a top cover (10), wherein entrances (14) of at least a number of said laying nests (7) are accessible across said top cover (10).

14. A method for holding poultry in a poultry house having a poultry house furnishing with at least two tier units (214, 215, 216), each having a number of tiers (2-5; 220) with sitting facilities, such as gratings (21) or roosts (224, 261), and at least one interspace (230, 231) between said tier units (214, 215, 216), and at least one tier (153; 240) which spans the at least one interspace (30, 31, 32) and comprises sitting facilities, such as gratings (21) or roosts (224, 271) at such a distance from upper tiers (4; 220) of said tier units (214, 215, 216) that poultry can move from said upper tiers (4; 220) to said spanning tier (153; 240) and vice versa, and feeding and/or drinking systems (22, 23; 222, 223) accessible to poultry from said sitting facilities (21; 224), comprising the step of:
temporarily preventing the animals from passing to or from the spanning tier (153; 240) from at least one other tier,
**characterized by** putting out poultry on the spanning tier (153; 240), the spanning tier (153; 240) having laying nests (126; 265, 275),
preventing, during a period of at least one day after the animals have been put out in a poultry house, the put-out poultry from leaving the spanning tier (153; 240) and a subjacent upper area of the house, and
releasing, after said period has passed, access to areas of the house which are located below said upper area.

15. A poultry house having a layout according to any one of the claims 1-13 and a floor (20; 60; 202) extending under said tier (2-5; 42-44; 82-84; 220, 240) and said row of laying nests (6; 7, 8; 46; 126; 265, 275).

## Patentansprüche

1. Geflügelstallausstattung mit:
- mindestens zwei Etagengestelleinheiten (214, 215, 216), von denen jede mindestens ein Etagengestell (2-5; 220) aufweist, das im Gebrauch mit Abstand über einem Boden (20; 202) angeordnet ist und mindestens eine Sitzeinrichtung, beispielsweise ein Gitter (21) oder ein Rost (224), und Versorgungseinrichtungen zumindest zum Fressen oder Trinken (22, 23; 222, 223) aufweist, wobei unter dem wenigstens einen Etagengestell (2-5; 220) Platz für die Tiere ist und wenigstens eines der Etagengestelle Legenester (126; 265, 275) aufweist, und
- einem Etagengestell (153; 240), das einen Zwischenraum (230, 231) zwischen den Etagengestelleinheiten (214, 215, 216) überspannt und wenigstens Sitzeinrichtungen (21; 224) und Fütter- und/oder Tränksysteme (22, 23; 222, 223) aufweist, die für das Geflügel von den Sitzeinrichtungen (21; 224) aus erreichbar sind, wobei das überspannende Etagengestell (153; 240) in einem derartigen Abstand von oberen Etagengestellen (4; 220) der Etagengestelleinheiten (214, 215, 216) beabstandet ist, daß sich das Geflügel von den oberen Etagengestellen (4; 220) zum überspannenden Etagengestell (153; 240) und umgekehrt bewegen kann,
**dadurch gekennzeichnet, daß**
- das Etagengestell (153; 240), welches den Zwischenraum (230, 231) zwischen den Etagengestelleinheiten (214, 215, 216) überspannt ferner Legenester (126; 275) aufweist.

2. Geflügelstallausstattung nach Anspruch 1, bei der der vom überspannenden Etagengestell (153; 240) überspannte Zwischenraum (230, 231) zwischen den Etagengestelleinheiten (214, 215, 216) mindestens einen Gang (230, 231) für in dem Stall arbeitende Personen bildet.

3. Geflügelstallausstattung nach einem der vorhergehenden Ansprüche, bei der sich das überspannende Etagengestell (153; 240) von oberhalb einer der Etagengestelleinheiten (214, 215, 216) bis oberhalb einer anderen Etagengestelleinheiten (214, 215, 216) erstreckt.

4. Geflügelstallausstattung nach einem der vorhergehenden Ansprüche, bei der das überspannende Etagengestell (153; 240) von den Etagengestelleinheiten (214, 215, 216) gestützt wird.

5. Geflügelstallausstattung nach einem der vorhergehenden Ansprüche, bei der das überspannende Etagengestell (153; 240) fest mit den Etagengestelleinheiten (214, 215, 216) verbunden ist.

6. Geflügelstallausstattung nach einem der vorhergehenden Ansprüche, bei der das überspannende Etagengestell (153; 240) mit mindestens einer Öffnung (250) versehen ist, durch welche Geflügel sich von dem überspannenden Etagengestell (153; 240) zu den oberen Etagengestellen (4; 220) der Etagengestelleinheiten (214, 215, 216) und umgekehrt bewegen kann.

7. Geflügeistallausstattung nach einem der vorhergehenden Ansprüche, bei der die Legenester (275) auf einer Höhe über dem Niveau des überspannenden Etagengestells (240) angeordnet sind.

8. Geflügelstallausstattung nach einem der vorhergehenden Ansprüche, bei der die Etagengestelleinheiten (214, 215, 216) unter dem überspannenden Etagengestell (153; 240) jeweils eine einzelne Reihe von Beinen (1; 210) aufweisen.

9. Geflügelstallausstattung nach Anspruch 8, bei der die Beine (1; 210) von einer Stirnseite gesehen mittig in den Etagengestelleinheiten (214, 215, 216) angeordnet sind.

10. Geflügelstallausstattung nach einem der vorhergehenden Ansprüche, ferner mit wenigstens einer Trennwand (242, 243, 246, 247), um unter dem überspannenden Etagengestell (240) einen oberen Bereich des Stalls von einem unteren Bereich des Stalls zu trennen.

11. Geflügelstallausstattung nach einem der vorhergehenden Ansprüche, bei der wenigstens zwei der Sitzeinrichtungen (18, 19, 21, 22,; 224, 261) jeweils nahe mindestens einem Eingang (14, 15) angeordnet sind, über welchen wenigstens ein bestimmtes der Legenester (6; 7, 8; 46; 126; 265) zugänglich ist, und die Sitzeinrichtungen in vertikaler Richtung über weniger als ein ganzes Etagengestell in bezug auf den wenigstens einen Eingang (14, 15) zu dem mindestens einen Legenest (6; 7, 8; 46; 126; 265) versetzt angeordnet sind.

12. Geflügelstallausstattung nach einem der vorhergehenden Ansprüche, ferner mit Durchgängen (27) zwischen jeweils mindestens zwei Legenestern (7, 8), die von verschiedenen Seiten her zugänglich sind, um es dem Geflügel zu ermöglichen, direkt von einem der Legenester (7, 8), das von einer Seite her zugänglich ist, zu einem benachbarten Legenest (8, 7) zu gelangen, das von der entgegengesetzten Seite her zugänglich ist.

13. Geflügelstallausstattung nach einem der vorhergehenden Ansprüche, ferner mit einer Eierförderbahn (9; 262), die sich entlang der Legenester (6; 7, 8; 46; 126; 265) erstreckt und eine obere Abdeckung (10) aufweist, wobei Eingänge (14) wenigstens einer Anzahl der Legenester (7) über die ober Abdeckung (10) zugänglich sind.

14. Verfahren zum Halten von Geflügel in einem Geflügelstall mit einer Geflügelstallausstattung mit mindestens zwei Etagengestelleinheiten (214, 215, 216), von denen jede eine Anzahl von Etagengestellen (2-5; 220) mit Sitzeinrichtungen, beispielsweise Gitter (21) oder Roste (224, 261), aufweist, und mindestens einem Zwischenraum (230, 231) zwischen den Etagengestelleinheiten (214, 215, 216) und mindestens einem Etagengestell (153; 240), das den mindestens einen Zwischenraum (30, 31, 32) überspannt und Sitzeinrichtungen, beispielsweise Gitter (21) oder Roste (224, 271), in einem derartigen Abstand von oberen Etagengestellen (4; 220) der Etagengestelleinheiten (214,215,216) beabstandet sind, daß sich das Geflügel von den oberen Etagengestellen (4; 220) zum überspannenden Etagengestell (153; 240) und umgekehrt bewegen kann, und mit Fütter- und/oder Tränksystemen (22, 23; 222, 223), die für das Geflügel von den Sitzeinrichtungen (21; 224) aus erreichbar sind, wobei das Verfahren den folgenden Schritt aufweist:
- zeitweiliges Hindern der Tiere am Wechseln zu oder von dem überspannenden Etagengestell (153; 240) von mindestens einem anderen Etagengestell,
**gekennzeichnet durch** das Ausbringen von Geflügel auf das überspannende Etagengestell (153; 240), wobei das überspannende Etagengestell (153; 240) Legenester (126; 265, 275) aufweist,
Hindern, während eines Zeitraums von wenigstens einem Tag nach dem Ausbringen der Tiere in einem Geflügelstall, der ausgebrachten Tiere am Verlassen des überspannenden Etagengestells (153; 240) und eines darunterliegenden Bereichs des Stalls; und
nach Ablauf des Zeitraums, Freigeben des Zugangs zu Bereichen des Stalls unterhalb des genannten oberen Bereichs.

15. Geflügelstall mit einer Ausbildung nach einem der Ansprüche 1-13 und einem Boden (20; 60; 202), der sich unter dem Etagengestell (2-5; 42-44; 82-84; 220, 240) und den Legenestern (6; 7, 8; 126; 265, 275) erstreckt.

## Revendications

1. Equipement de poulailler, comprenant :
au moins deux unités à étage (214, 215, 216), chaque unité a étage ayant au moins un étage (2-5 ; 220) qui, dans les conditions d'utilisation, se trouve à une certaine distance au-dessus d'un plancher (20 ; 202) et a au moins un arrangement de résidence, tel qu'une grille (21) ou un perchoir (224), et des arrangements d'administration au moins pour l'alimentation et l'abreuvement (22, 23 ; 222, 223), dans lequel un espace destiné aux animaux est présent au-dessous de l'étage au moins (2-5 ; 220) et l'un au moins des étages a des nids de ponte (126 ; 265, 275), et
un étage (153 ; 240) qui recouvre un espace intermédiaire (230, 231) placé entre les unités à étage (214, 215, 216) et qui comporte au moins des arrangements de résidence (21 ; 224) et des systèmes d'alimentation et/ou d'abreuvement (22, 23 ; 222, 223) accessibles à la volaille depuis les arrangements de résidence (21 ; 224), dans lequel l'étage (153 ; 240) de recouvrement est placé à une distance des étages supérieurs (4 ; 220) des unités à étage (214, 215, 216) telle que la volaille peut passer des étages supérieurs (4 ; 220) à l'étage de recouvrement (153 ; 240) et inversement,
**caractérisé en ce que** l'étage (153 ; 240) qui recouvre l'espace intermédiaire (230, 231) entre les unités à étage (214, 215, 216) comporte en outre des nids de ponte (126 ; 275).

2. Equipement de poulailler selon la revendication 1, dans lequel l'espace intermédiaire (230, 231) entre les unités à étage (214, 215, 216) qui est recouvert par l'étage de recouvrement (153 ; 240) forme au moins un couloir (230, 231) pour les personnes qui travaillent dans le poulailler.

3. Equipement de poulailler selon l'une quelconque des revendications précédentes, dans lequel l'étage de recouvrement (153 ; 240) s'étend depuis un emplacement disposé au-dessus de l'une des unités à étage (214, 215, 216) vers un emplacement qui est au-dessus d'une autre des unités à étage (214, 215, 216).

4. Equipement de poulailler selon l'une quelconque des revendications précédentes, dans lequel l'étage de recouvrement (153 ; 240) est supporté par les unités à étage (214, 215, 216).

5. Equipement de poulailler selon l'une quelconque des revendications précédentes, dans lequel l'étage de recouvrement (153 ; 240) est raccordé de manière fixe aux unités à étage (214, 215, 216).

6. Equipement de poulailler selon l'une quelconque des revendications précédentes, dans lequel l'étage de recouvrement (153 ; 240) possède au moins une ouverture (250) par laquelle la volaille peut passer de l'étage de recouvrement (153 ; 240) vers les étages supérieurs (4 ; 220) des unités à étage (214, 215, 216) et inversement.

7. Equipement de poulailler selon l'une quelconque des revendications précédentes, dans lequel les nids de ponte (275) sont placés à un niveau supérieur au niveau de l'étage de recouvrement (240).

8. Equipement de poulailler selon l'une quelconque des revendications précédentes, dans lequel les unités à étage (214, 215, 216) placées sous l'étage de recouvrement (153 ; 240) comportent chacun une rangée unique de pieds (1 ; 210).

9. Equipement de poulailler selon la revendication 8, dans lequel les pieds (1 ; 210), vus depuis une face d'extrémité, sont disposés au centre dans les unités à étage (214, 215, 216).

10. Equipement de poulailler selon l'une quelconque des revendications précédentes, comprenant en outre au moins une cloison (242, 243, 246, 247) destinée à séparer, sous l'étage de recouvrement (240), une partie supérieure du poulailler d'une partie inférieure du poulailler.

11. Equipement de poulailler selon l'une quelconque des revendications précédentes, dans lequel deux au moins des arrangements de résidence (18, 19, 21, 22 ; 61 ; 224, 261) sont disposés chacun près d'au moins une entrée (14, 15) par laquelle est accessible un nid particulier au moins parmi les nids de ponte (6 ; 7, 8 ; 46 ; 126 ; 265), et sont décalés en direction verticale de moins d'un étage entier par rapport à ladite entrée au moins (14, 15) jusqu'audit nid au moins de ponte (6 ; 7, 8 ; 46, 126 ; 265).

12. Equipement de poulailler selon l'une quelconque des revendications précédentes, comprenant en outre des passages (27) disposés entre chaque paire de nids de ponte au moins (7, 8) accessibles par des côtés différents, afin que la volaille puisse passer directement de l'un des nids de ponte (7, 8) accessible d'un côté à un nid adjacent parmi les nids de ponte (8, 7) et accessible d'un côté opposé.

13. Equipement de poulailler selon l'une quelconque des revendications précédentes, comprenant en outre une voie (9 ; 262) de transport d'oeufs qui s'étend le long des nids de ponte (6 ; 7, 8 ; 46 ; 126 ; 265) et ayant un couvercle supérieur (10), dans lequel les entrées (14) d'un certain nombre au moins des nids de ponte (7) sont accessibles par le couvercle supérieur (10).

14. Procédé de logement de volailles dans un poulailler ayant un équipement de poulailler qui possède au moins deux unités à étages (214, 215, 216), ayant chacune un certain nombre d'étages (2-5 ; 220) munis d'arrangements de résidence, tels que des grilles (21) ou des perchoirs (224, 261), au moins un espace intermédiaire (230, 231) placé entre les unités à étages (214, 215, 216), et au moins un étage (153 ; 240) qui recouvre l'espace intermédiaire au moins (30, 31, 32) et comprend des arrangements de résidence, tels que des grilles (21) ou des perchoirs (224, 271) à une distance des étages supérieurs (4 ; 220) des unités à étages (214, 215, 216) telle que la volaille peut se déplacer des étages supérieurs (4 ; 220) à l'étage de recouvrement (153 ; 240) et inversement, et des systèmes d'alimentation et/ou d'abreuvement (22, 23 ; 222, 223) accessibles à la volaille depuis les arrangements de résidence (21 ; 224), comprenant l'étape :
d'interdiction temporaire du passage des animaux vers l'étage de recouvrement (153 ; 240) ou à partir de celui-ci, depuis au moins un autre étage,
**caractérisé par**
la disposition de volailles sur l'étage de recouvrement (153 ; 240), l'étage de recouvrement (153 ; 240) ayant des nids de ponte (126 ; 265, 275),
l'interdiction, pendant une période d'au moins un jour après la disposition des animaux dans le poulailler, pour la volaille ainsi disposée, de quitter l'étage de recouvrement (153 ; 240) et une région supérieure sous-jacente du poulailler, et
le dégagement, après l'écoulement de cette période, de l'accès aux régions du poulailler qui se trouvent au-dessous de la région supérieure.

15. Poulailler ayant une disposition selon l'une quelconque des revendications 1 à 13 et un plancher (20 ; 60 ; 202) qui s'étend sous ledit étage (2-5 ; 42-44 ; 82-84 ; 220, 240) et la ligne de nids de ponte (6 ; 7, 8 ; 46 ; 126 ; 265, 275).
